# EUROPEAN PATENT APPLICATION

(11) **EP 4 654 278 A1**
(43) Date of publication of application: **26.11.2025**
(21) Application number: 25166321.7
(22) Date of filing: 26.03.2025
(51) Int. Cl.: H01M 4/131, H01M 4/136, H01M 4/525, H01M 4/58, H01M 4/62

(54) **RECHARGEABLE LITHIUM BATTERIES**

(30) Priority: 21.05.2024 KR 20240065961
(71) Applicant: SAMSUNG SDI CO., LTD., Yongin-si, Gyeonggi-do 17084 (KR)
(72) Inventor: JEOUNG, Jinman, 17084 Yongin-si (KR)
(74) Representative: Marks & Clerk LLP

(57) **Abstract**

A rechargeable lithium battery includes a first electrode assembly including a first positive electrode, a first separator, and a first negative electrode, the first positive electrode including a first positive electrode active material including a lithium nickel-based composite oxide. The rechargeable lithium battery also includes a second electrode assembly including a second positive electrode, a second separator, and a second negative electrode, the second positive electrode including a second positive electrode active material including a lithium iron phosphate-based compound. A case accommodates the first electrode assembly and the second electrode assembly. At least one of the first positive electrode and the second positive electrode includes activated carbon.

## Description

### BACKGROUND

### 1. Field

Rechargeable lithium batteries are disclosed.

### 2. Description of the Related Art

Rechargeable lithium batteries are easy to carry, realize high energy density, and are widely used as a driving power source for mobile information terminals such as smartphones and laptops. Rechargeable lithium batteries with high safety and high capacity are being actively researched for use as a driving power source for hybrid vehicles or electric vehicles, or as a power storage power source.

Recently, there have been requirements for rechargeable lithium batteries that have rapid charging characteristics and are safe. Accordingly, low-cost lithium iron phosphate-based compounds have been proposed as positive electrode active materials. The lithium iron phosphate-based compounds may be used after adding activated carbon thereto to increase a concentration of lithium ions around the lithium iron phosphate-based compounds and, thus, provide a rechargeable lithium battery having improved charge/discharge characteristics at high rates and have excellent cycle-life characteristics. However, while charge/discharge characteristics may be improved when activated carbon is used in a positive electrode, capacity may be reduced. In order to solve this problem, a lithium nickel-based composite oxide having high capacity may be introduced.

For example, Chinese Patent Publication No. 108987672 (2020.03.31) (referred to hereinafter as Patent Document 1) discloses a lithium ion battery having a positive electrode including a lithium nickel-based composite oxide, a lithium iron phosphate-based compound, and activated carbon and a graphite-based carbon negative electrode. However, as shown in Patent Document 1, if the lithium nickel-based composite oxide and the lithium iron phosphate-based compound are mixed in a positive electrode slurry, because the lithium nickel-based composite oxide has a micro particle size and the lithium iron phosphate-based compound, which has a nano particle size, the different particle sizes and different properties, make it difficult to realize a high performance electrode plate. In addition, there is a problem that high performance is difficult to achieve by using types and content of general binders and conductive materials.

Accordingly, safe, reduced cost rechargeable lithium batteries having high capacity, rapid charging characteristics, long cycle-life characteristics, and improved charge/discharge characteristics are desired.

### SUMMARY

Some example embodiments provide a rechargeable lithium battery that can secure high safety, high capacity, rapid charging characteristics and long cycle-life characteristics while reducing cost and can further improve charge/discharge characteristics.

A rechargeable lithium battery according to according to some example embodiments includes a first electrode assembly including a first positive electrode, a first separator, and a first negative electrode, the first positive electrode including a first positive electrode active material including a lithium nickel-based composite oxide; a second electrode assembly including a second positive electrode, a second separator, and a second negative electrode, the second positive electrode including a second positive electrode active material including a lithium iron phosphate-based compound; and a case accommodating the first electrode assembly and the second electrode assembly, wherein at least one of the first positive electrode and the second positive electrode includes activated carbon.

At least some of the above and other features of the invention are set out in the claims.

A rechargeable lithium battery according to example embodiments is safe, has high capacity, has rapid charging characteristics, has long cycle-life characteristics, can be manufactured at a reduced cost, and can have improved charge/discharge characteristics.

### BRIEF DESCRIPTION OF THE DRAWINGS

FIG. 1 is a schematic view showing the structure of a rechargeable lithium battery according to some example embodiments.
FIG. 2 is a schematic view showing the structure of a first electrode assembly of a jelly-roll type according to some example embodiments.
FIG. 3 is a schematic diagram showing the structure of a first electrode assembly of a stack type according to some example embodiments.
FIGS. 4 to 7 are schematic diagrams illustrating rechargeable lithium batteries according to some example embodiments.
FIG. 8 is a photograph of the first electrode assembly and the second electrode assembly manufactured in Example 1.
FIG. 9 is a graph showing voltage curves according to the capacity of rechargeable lithium battery cells manufactured in Example 1, Comparative Examples 1 and 2, and Reference Examples 1 and 2.
FIG. 10 is a graph showing the capacity retention rates according to the number of cycles of the rechargeable lithium battery cells of Example 1, Comparative Example 1, and Reference Example 1.

### DETAILED DESCRIPTION

Hereinafter, specific embodiments will be described in detail so that those of ordinary skill in the art can easily implement them. However, this disclosure may be embodied in many different forms and is not limited to the example embodiments set forth herein.

The terminology used herein is used to describe embodiments only and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter (D₅₀) may be measured by a method well known to those skilled in the art, for example, by a particle size analyzer, or by a transmission electron microscopic image or a scanning electron microscopic image. Alternatively, it is possible to obtain an average particle diameter value by measuring using a dynamic light scattering method, performing data analysis, counting the number of particles for each particle size range, and calculating from this. Unless otherwise defined, the average particle diameter (D₅₀) may mean the diameter of particles having a cumulative volume of 50 volume% in the particle size distribution. As used herein, when a definition is not otherwise provided, the average particle diameter (D₅₀) means a diameter of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

The terms "first" and "second" used here are simply written as "first" and "second" to indicate different things, and do not indicate any order of priority between them.

### <Rechargeable Lithium Battery>

In some example embodiments, a rechargeable lithium battery is provided in which an electrode assembly having a positive electrode including a lithium nickel-based composite oxide and an electrode assembly including a positive electrode including a lithium iron phosphate-based compound are housed in parallel within a single case. This is a hybrid type rechargeable lithium battery that combines electrode assemblies including different types of positive electrode active materials. Such a rechargeable lithium battery may not suffer from deterioration of properties of a positive electrode active material due to direct mixing of the lithium nickel-based composite oxide and the lithium iron phosphate-based compounds, deterioration of processability, deterioration of durability of an electrode plate, and the like. But the rechargeable lithium battery has the advantages of a lithium iron phosphate positive electrode active material, advantages of the lithium nickel-based composite oxide, and advantages of activated carbon with respect to lower a production cost, improved capacity deterioration, increased output characteristics, and long cycle-life characteristics. The rechargeable lithium battery includes the activated carbon in at least one of a first positive electrode and a second positive electrode to speed up movement of lithium ions and thereby further improve output characteristics and high-rate characteristics. Such a rechargeable lithium battery may not only be less expensive but also be safe, have high capacity, rapid charging characteristics, long cycle-life characteristics, and improved charge/discharge characteristics.

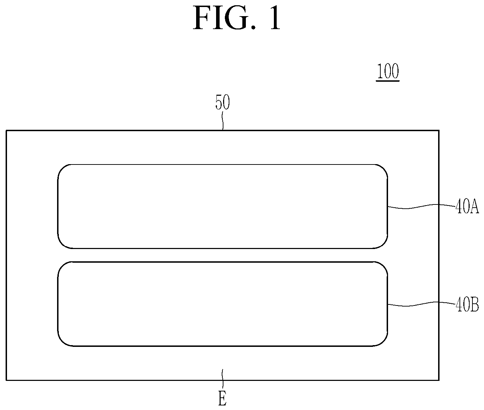

FIG. 1 is a cross-sectional view schematically illustrating a rechargeable lithium battery according to some example embodiments.

Referring to FIG. 1, the rechargeable lithium battery 100 includes a first electrode assembly 40A, a second electrode assembly 40B, and a case 50 in which the first electrode assembly 40A and the second electrode assembly 40B are housed. The first electrode assembly 40A and the above second electrode assembly 40B may be impregnated with an electrolyte E. In FIG. 1, the first electrode assembly 40A and the second electrode assembly 40B are illustrated as each being provided in the case 50, but this is only illustrated for convenience in order to show the structure of a rechargeable lithium battery 100 including the first electrode assembly 40A and the second electrode assembly 40B. The number of the first electrode assemblies 40A and the second electrode assemblies 40B is not limited in this disclosure.

The first electrode assembly 40A includes a first positive electrode including a first positive electrode active material including a lithium nickel-based composite oxide, a first separator, and a first negative electrode. The second electrode assembly 40B includes a second positive electrode including a second positive electrode active material including a lithium iron phosphate-based compound, a second separator, and a second negative electrode. At least one of the first positive electrode and the second positive electrode includes activated carbon.

According to some example embodiments, a rechargeable lithium battery includes a first electrode assembly including a first positive electrode including a lithium nickel-based composite oxide and a second electrode assembly including a second positive electrode including a lithium iron phosphate-based compound, with the first and second electrode assemblies being housed within a case. Thus, the rechargeable lithium battery may be made safe, have high capacity, have rapid charging characteristics, have long cycle-life characteristics, and have improved charge/discharge characteristics.

Within one case, one or more first electrode assemblies and second electrode assemblies may be housed. For example, the number ratio of the first electrode assembly to the second electrode assembly included in one case may be about 1:9 to about 9:1. Specifically, the number ratio may be about 2:8 to about 8:2, about 3:7 to about 7:3, about 4:6 to about 6:4, about 4:6 to about 9:1, about 5:5 to about 9:1, about 6:4 to about 8:2, about 1:9 to about 6:4, about 1:9 to about 5:5, about 2:8 to about 4:6, 6:4 to about 9:1, or 1:9 to about 4:6. By appropriately changing the ratio of the number of the first electrode assembly and the second electrode assembly, desired characteristics such as capacity, output, and cycle-life may be adjusted. For example, if the number ratio of the first electrode assembly to the second electrode assembly in one case is set to about 6:4 to about 9:1, it is possible to implement appropriate output characteristics while increasing the capacity. As another example, if the number ratio is set to about 1:9 to about 4:6, it is possible to improve the output characteristics and high-rate characteristics and reduce the production cost.

Hereinafter, the positive electrode (first positive electrode, second positive electrode), negative electrode (first negative electrode, second negative electrode), separator, electrode assembly, and rechargeable lithium battery are described in detail.

### Positive Electrode

The first positive electrode included in the first electrode assembly and the second positive electrode included in the second electrode assembly will be described. Here, the terms "first positive electrode" and "second positive electrode" are only used to identify the positive electrode including a lithium nickel-based composite oxide and the positive electrode including a lithium iron phosphate-based compound, and do not indicate any "first or second" priority between them.

### First and Second Positive Electrodes

In some example embodiments, a first positive electrode including a first positive electrode active material including a lithium nickel-based composite oxide is provided.

The first positive electrode may include a first positive electrode current collector and a first positive electrode active material layer on the first positive electrode current collector, and the first positive electrode active material layer may include a first positive electrode active material. The first positive electrode active material includes the aforementioned lithium nickel-based composite oxide.

The lithium nickel-based composite oxide may contain nickel within the following ranges. In the lithium nickel-based composite oxide, the nickel content relative to 100 mol% of the total metal excluding lithium may be greater than or equal to about 30 mol%. For example, the nickel content relative to 100 mol% of the total metal excluding lithium may be greater than or equal to about 40 mol%, greater than or equal to about 50 mol%, greater than or equal to about 60 mol%, greater than or equal to about 70 mol%, greater than or equal to about 80 mol%, or greater than or equal to about 90 mol%, and may be less than about 100 mol%, less than or equal to about 99.9 mol%, less than or equal to about 90 mol%, less than or equal to about 80 mol%, or less than or equal to about 60 mol%.

The lithium nickel-based composite oxide may be represented, for example, by Chemical Formula 1.

[Chemical Formula 1] Liₐ₁Niₓ₁M¹_{y1}M²_{z1}O_{2-b1}X_{b1}

In Chemical Formula 1, 0.9≤a1≤1.2, 0.3≤x1<1, 0<y1≤0.7, 0≤z1 ≤0.7, 0.9≤x1+y1+z1≤1.1, and 0≤b1≤0.1, M¹ and M² are each independently one or more elements selected from Al, B, Ba, Ca, Ce, Co, Cr, Cu, Fe, Mg, Mn, Mo, Nb, Si, Sn, Sr, Ti, V, W, Y, Zn, and Zr, and X is one or more elements selected from F, P, and S. Also in Chemical Formula 1, for example, 0.3≤x1≤0.8, 0.1≤y1≤0.6, and 0.1≤z1≤0.6, or 0.3≤x1≤0.6, 0.2≤y1≤0.5, and 0.2≤z1≤0.5.

The lithium nickel-based composite oxide may be represented by the Chemical Formula 2 or Chemical Formula 3 as a specific example.

[Chemical Formula 2] Liₐ₂Niₓ₂Co_{y2}M³_{z2}O_{2-b2}X_{b2}

In Chemical Formula 2, 0.9≤a2≤1.2, 0.3≤x2<1, 0<y2≤0.7, 0≤z2≤0.7, 0.9≤x2+y2+z2≤1.1, and 0≤b2≤0.1, M³ is one or more elements selected from Al, B, Ba, Ca, Ce, Cr, Cu, Fe, Mg, Mn, Mo, Nb, Si, Sn, Sr, Ti, V, W, Y, Zn, and Zr, and X is F, P, S, or a combination thereof. Also in Chemical Formula 2, for example, 0.3≤x2≤0.8, 0.1≤y2≤0.6, and 0.1≤z2≤0.6, or 0.3≤x2≤0.6, 0.2≤y2≤0.5, and 0.2≤z2≤0.5.

[Chemical Formula 3] Liₐ₃Niₓ₃Co_{y3}M⁴_{z3}M⁵_{w3}O_{2-b3}X_{b3}

In Chemical Formula 3, 0.9≤a3≤1.2, 0.3≤x3≤0.98, 0.01≤y3≤0.69, 0.01≤z3≤0.69, 0≤w3≤0.68, 0.9≤x3+y3+z3+w3≤1.1, and 0≤b3≤0.1, M⁴ is Al, Mn, or a combination thereof, M⁵ is one or more elements selected from B, Ba, Ca, Ce, Cr, Cu, Fe, Mg, Mo, Nb, Si, Sn, Sr, Ti, V, W, Y, Zn, and Zr, and X is F, P, S or a combination thereof. Also in Chemical Formula 3, for example, 0.3≤x3≤0.8, 0.1≤y3≤0.6, 0.1≤z3≤0.6, and 0≤w3≤0.5, or 0.3≤x3≤0.6, 0.2≤y3≤0.5, 0.2≤z3≤0.5, and 0≤w3≤0.3.

In some example embodiments, the first positive electrode active material including the lithium nickel-based composite oxide may be included in an amount of about 90 wt% to about 99 wt% based on 100 wt% of the first positive electrode active material layer. More specifically, the lithium nickel-based composite oxide may be included in an amount of greater than or equal to about 94 wt%, greater than or equal to about 95 wt%, or greater than or equal to about 96 wt%, and less than or equal to about 98.5 wt%, or less than or equal to about 98 wt% based on 100 wt% of the first positive electrode active material layer. The first positive electrode active material including the lithium nickel-based composite oxide may form a good electrode plate while implementing high capacity by being included in the first positive electrode active material layer in an amount within the above-mentioned ranges.

In some example embodiments, the lithium nickel-based composite oxide may be in the form of secondary particles formed by agglomeration of a plurality of primary particles or in the form of a single particle. The average particle diameter (D₅₀) of the particles may be about 0.5 µm to about 20 µm, or about 1 µm to about 18 µm. For example, when the particles are in the form of secondary particles, the average particle diameter (D₅₀) of the secondary particles may be about 3 µm to about 20 µm, about 5 µm to about 18 µm, or about 8 µm to about 15 µm. When the particles are in the form of single particles, the average particle diameter (D₅₀) of the single particles may be about 0.5 µm to about 8 µm, or about 1 µm to about 5 µm. The average particle diameter (D₅₀) may be determined by selecting about 20 random particles from a scanning electron microscope image, measuring the particle sizes (particle diameter, major axis, or major axis length), obtaining a particle size distribution, and then taking the size (D₅₀) of particles having a cumulative volume of 50 volume% from the particle size distribution.

Here, the single particles may exist alone without a grain boundary within the particle, be composed of one particle, and may be a single particle, a monolith structure, a one body structure, or a non-agglomerated particle in which particles are not agglomerated with each other but exist as an independent phase in terms of morphology, and may be expressed as a single particle (one body particle, single grain), for example, as a single crystal.

Single particles may exist alone or they may be grouped together. For example, two to ten single particles may be grouped together and in contact with each other.

A loading level of the first positive electrode active material layer may be, for example, about 5 mg/cm² to about 50 mg/cm². For example, the loading level may be greater than or equal to about 5.5 mg/cm², greater than or equal to about 6 mg/cm², greater than or equal to about 6.5 mg/cm², greater than or equal to about 7 mg/cm², greater than or equal to about 7.5 mg/cm², greater than or equal to about 8 mg/cm², greater than or equal to about 8.5 mg/cm², greater than or equal to about 9 mg/cm², greater than or equal to about 9.5 mg/cm², or greater than or equal to about 10 mg/cm², and less than or equal to about 45 mg/cm², less than or equal to about 40 mg/cm², less than or equal to about 35 mg/cm², less than or equal to about 30 mg/cm², less than or equal to about 25 mg/cm², less than or equal to about 20 mg/cm², less than or equal to about 15 mg/cm², or less than or equal to about 10 mg/cm².

Additionally, the density of the first positive electrode active material layer in the compressed final positive electrode may be about 2 g/cc to about 5 g/cc. For example, the density may be greater than or equal to about 2.5 g/cc, greater than or equal to about 3 g/cc, or greater than or equal to about 3.5 g/cc, and less than or equal to about 4.5 g/cc, less than or equal to about 4 g/cc, or less than or equal to about 3.5 g/cc. A first positive electrode satisfying the loading level and the density of the first positive electrode active material layer within the above ranges can help implement high capacity and high energy density.

In some example embodiments, a second positive electrode active material including a lithium iron phosphate-based compound is provided. For example, the second positive electrode may include a second positive electrode current collector and a second positive electrode active material layer on the second positive electrode current collector, and the second positive electrode active material layer may include a second positive electrode active material.

The lithium iron phosphate-based compound can be represented by, for example, Chemical Formula 4 or Chemical Formula 5.

[Chemical Formula 4] Liₐ₄Fe₍₁₋ₓ₄₎M⁴ₓ₄PO₄

In Chemical Formula 4, 0.90≤a4≤1.5, 0≤x4≤0.4, and M⁴ is Al, Ca, Ce, Cr, Cu, La, Mg, Mn, Mo, Nb, Ni, Sn, Sr, Ti, V, W, Y, Zn, Zr, or a combination thereof.

[Chemical Formula 5] Liₐ₅Mnₓ₅Fe_{(1-x5-y5)}M⁵_{y5}PO₄

In Chemical Formula 5, 0.90≤a5≤1.5, 0.1≤x5≤0.9, 0≤y5<0.9, and M⁵ is Al, Ca, Ce, Cr, Cu, La, Mg, Mo, Nb, Ni, Sn, Sr, Ti, V, W, Y, Zn, Zr, or a combination thereof.

In some example embodiments, the second positive electrode active material including the lithium iron phosphate-based compound may be included in an amount of about 90 wt% to about 99 wt% based on 100 wt% of the second positive electrode active material layer. More specifically, the second positive electrode active material including the lithium iron phosphate-based compound may be included in an amount greater than or equal to about 94 wt%, greater than or equal to about 95 wt%, or greater than or equal to about 96 wt%, and less than or equal to about 98.5 wt%, or less than or equal to about 98 wt%, based on 100 wt% of the second positive electrode active material layer. The second positive electrode active material containing the lithium iron phosphate-based compound may form a good electrode plate while implementing high output characteristics and energy density by being included in the second positive electrode active material layer in an amount within the above-mentioned ranges.

In some example embodiments, the lithium iron phosphate-based compound may be in the form of first particles, second particles, or a mixture of first particles and second particles. The first particles may be an assembly of multiple nano-sized primary particles or secondary particles. The first particles may have a spherical or ellipsoidal shape as the primary particles are closely packed together. An average particle diameter (D₅₀) of the first particles may be, for example, about 2 µm to about 15 µm, about 3 µm to about 12 µm, or about 3 µm to about 10 µm. The average particle diameter (D₅₀) of the first particles may be greater than the average particle diameter (D₅₀) of the second particles (which will be described later). An average particle diameter (D₅₀) of the primary particles of the first particles may be, for example, about 10 nm to about 400 nm, about 20 nm to about 300 nm, or about 50 nm to about 200 nm. The average particle diameter (D₅₀) of the first particles may be obtained by randomly selecting about 30 first particles from an electron microscope image of the lithium iron phosphate-based compound, measuring the particle diameter, and taking the diameter of the particles having a cumulative volume of 50 volume% from the particle size distribution as the average particle diameter (D₅₀). The average particle diameter (D₅₀) of the primary particles of the first particles may be obtained by measuring the sizes of about 30 primary particles in an electron microscope image of the surfaces or cross-sections of the first particles and taking the diameter of the particles having a cumulative volume of 50 volume% in the particle size distribution as the average particle diameter (D₅₀).

A porosity of the first particle may be about 20% to about 50%. The porosity may be, obtained, for example, by measuring an area ratio of the portion occupied by pores within the particle using an image analysis program such as ImageJ in a scanning electron microscope image of a cross-section of the first particles.

The second particles may have a form of single particles. An average particle diameter (D₅₀) of the second particles may be, for example, about 10 nm to about 900 nm, about 50 nm to about 500 nm, or about 100 nm to about 300 nm. The average particle diameter (D₅₀) of the second particles may be less than the average particle diameter (D₅₀) of the first particles and may be equal to or greater than the average particle diameter (D₅₀) of the primary particles of the first particles. The average particle diameter (D₅₀) of the second particles may be obtained by randomly selecting about 30 second particles from an electron microscope image of a lithium iron phosphate-based compound, measuring the particle sizes, and taking the diameter of the particles having a cumulative volume of 50 volume% in the particle size distribution as the average particle diameter (D₅₀).

The lithium iron phosphate-based compound may further include a carbon coating layer on the particle surfaces. The carbon coating layer may improve the electrical conductivity of the lithium iron phosphate-based compound and reduce the resistance of the positive electrode. The carbon coating layer may be formed using at least one raw material selected from, for example, glucose, sucrose, lactose, starch, oligosaccharide, polyoligosaccharide, fructose, cellulose, a polymer of furfuryl alcohol, a block copolymer of ethylene and ethylene oxide, a vinyl resin, a cellulose resin, a phenol resin, a pitch resin, and a tar resin. The carbon coating layer may be formed by arranging the raw materials on the surface of the lithium iron phosphate-based compound particles and then performing a sintering process.

A loading level of the second positive electrode active material layer may be about 5 mg/cm² to about 50 mg/cm², for example, greater than or equal to about 5.5 mg/cm², greater than or equal to about 6 mg/cm², greater than or equal to about 6.5 mg/cm², greater than or equal to about 7 mg/cm², greater than or equal to about 7.5 mg/cm², greater than or equal to about 8 mg/cm², greater than or equal to about 8.5 mg/cm², greater than or equal to about 9 mg/cm², greater than or equal to about 9.5 mg/cm², or greater than or equal to about 10 mg/cm², and less than or equal to about 45 mg/cm², less than or equal to about 40 mg/cm², less than or equal to about 35 mg/cm², less than or equal to about 30 mg/cm², less than or equal to about 25 mg/cm², less than or equal to about 20 mg/cm², less than or equal to about 15 mg/cm², or less than or equal to about 10 mg/cm².

The density of the second positive electrode active material layer in the compressed final positive electrode may be about 2 g/cc to about 5 g/cc. For example, the density of the second positive electrode active material layer may be greater than or equal to about 2.5 g/cc, greater than or equal to about 3 g/cc, or greater than or equal to about 3.5 g/cc, and less than or equal to about 4.5 g/cc, less than or equal to about 4 g/cc, or less than or equal to about 3.5 g/cc. The second positive electrode satisfying the loading level and the density of the second positive electrode active material layer within the above ranges may have high output characteristics and energy density.

The weight ratio (a/b) of the content (a) of the first positive electrode active material to the content (b) of the second positive electrode active material included in one case may be adjusted to an appropriate range by adjusting the number ratio of electrode assemblies, the loading level of the positive electrode active material layer, the density of the positive electrode active material layer of the electrode plates, etc. For example, the weight ratio (a/b) of the content (a) of the first positive electrode active material to the content (b) of the second positive electrode active material included in one case may be about 1:9 to about 9:1. Specifically, the weight ratio (a/b) may be about 2:8 to about 8:2, about 3:7 to about 7:3, or about 4:6 to about 6:4. By adjusting the weight ratio (a/b) of the content (a) of the first positive electrode active material to the content (b) of the second positive electrode active material included in one case to be within the above ranges the cell capacity and output characteristics may be controlled.

### Activated Carbon

Activated carbon physically adsorbs lithium ions and quickly transfers the adsorbed lithium ions to the positive electrode active materials (lithium nickel-based composite oxide, lithium iron phosphate-based compound). Accordingly, because of the inclusion of activated carbon, high-rate charge/discharge is further enhanced, and charge and discharge efficiency and cycle-life characteristics at high rates may be significantly improved.

As the activated carbon, at least one of wood-based activated carbon, palm shell-based activated carbon, coconut shell-based activated carbon, petroleum pitch-based activated carbon, and phenol-based activated carbon may be used.

In some example embodiments, at least one of the first positive electrode and the second positive electrode includes the activated carbon. For example, the activated carbon may be included in the first positive electrode alone, the second positive electrode alone, or both of the first positive electrode and the second positive electrode. The activated carbon may be included in positive electrode active material layers included in the positive electrodes.

The first and second positive electrodes according to some example embodiments include the activated carbon in a relatively small amount but still may significantly improve charge/discharge efficiency and cycle-life characteristics.

For example, if the activated carbon is included in a first positive electrode active material layer, the activated carbon may be included in an amount of about 1 wt% to about 10 wt% based on 100 wt% of the first positive electrode active material layer. Specifically, the activated carbon may be included in an amount greater than or equal to about 1.5 wt%, greater than or equal to about 2 wt%, greater than or equal to about 3 wt%, greater than or equal to about 4 wt%, or greater than or equal to about 5 wt% and less than or equal to about 9 wt%, less than or equal to about 8 wt%, less than or equal to about 7 wt%, less than or equal to about 6 wt%, or less than or equal to about or 5 wt%, based on 100 wt% of the first positive electrode active material layer. In addition, if the activated carbon is included in a second positive electrode active material layer, the activated carbon may be included in an amount of about 1 wt% to about 10 wt% based on 100 wt% of the second positive electrode active material layer. Specifically, the activated carbon may be included in an amount greater than or equal to about 1.5 wt%, greater than or equal to about 2 wt%, greater than or equal to 3 wt%, greater than or equal to 4 wt%, or greater than or equal to about 5 wt% and less than or equal to about 9 wt%, less than or equal to about 8 wt%, less than or equal to about 7 wt%, less than or equal to about 6 wt%, or less than or equal to about or 5 wt%, based on 100 wt% of the second positive electrode active material layer. If the activated carbon is included within the weight ratio ranges in the first and second positive electrode active material layers, the activated carbon is included in a relatively smaller amount as compared to other rechargeable lithium batteries but still may significantly improve charge/discharge efficiency at high rates and cycle-life characteristics.

In some example embodiments, the activated carbon may be included in both of the first positive electrode and the second positive electrode. If the activated carbon is included in both of the first positive electrode and the second positive electrode, a ratio of a content of the activated carbon included in the first positive electrode active material layer and a content of the activated carbon included in the second positive electrode active material layer may be controlled within an appropriate range.

Herein, the weight ratio (c/d) of the content (c) of the activated carbon included in the first positive electrode active material layer to the content (d) of the activated carbon included in the second positive electrode active material layer may be about 0.1 to about 10. Specifically, the weight ratio (c/d) of the content (c) of the activated carbon included in the first positive electrode active material layer to the content (d) of the activated carbon included in the second positive electrode active material layer may be about 0.2 to about 5, about 0.3 to about 4, about 0.4 to about 3, or about 0.5 to about 2. The activated carbon may be included in the first and second positive electrode active material layers within the weight ratio ranges, and if the activated carbon is included within the weight ratio ranges in the first and second positive electrode active material layers, charge/discharge efficiency and cycle-life characteristics at high rates may be improved.

The contents of the activated carbon included in the first and second positive electrodes and the weight ratio of the activated carbon may be appropriately adjusted depending on the first and seconds positive electrodes.

The activated carbon may satisfy a specific surface area and an average particle diameter (D₅₀) within each predetermined range, and the activated carbon respectively included in the first positive electrode active material layer and the second positive electrode active material layer may have the same or different specific surface area and average particle diameter (D₅₀).

The activated carbon may have a specific surface area of about 1000 m²/g to about 3000 m²/g. For example, the activated carbon may have a specific surface area of greater than or equal to about 1100 m²/g, greater than or equal to about 1200 m²/g, greater than or equal to about 1300 m²/g, greater than or equal to about 1400 m²/g, greater than or equal to about 1500 m²/g, or greater than or equal to about 1600 m²/g and less than or equal to 2800 m²/g, less than or equal to about 2600 m²/g, less than or equal to about 2400 m²/g, less than or equal to about 2200 m²/g, less than or equal to about 2000 m²/g, less than or equal to about 1800 m²/g, or less than or equal to about 1600 m²/g. If the activated carbon has a specific surface area within these ranges, rechargeable lithium batteries including the activated carbon may have high input/output characteristics and improved cycle-life characteristics. The above specific surface area can be measured by, for example, a nitrogen gas adsorption method using a surface area measuring device HM model-1208 manufactured by MOUNTECH. Specifically, about 0.3 g of an activated carbon sample is heated in a preprocessor in a nitrogen atmosphere at 300°C for 1 hour, then additionally preprocessed at 300°C for 15 minutes in a surface area measuring device, cooled to the temperature of liquid nitrogen, and saturated with a gas containing 30% nitrogen and 70% He. Thereafter, the sample is heated to room temperature, the amount of desorbed gas is measured, and the surface area can be calculated from the obtained results by a conventional BET method.

The activated carbon may have an average particle diameter (D₅₀) of about 1 µm to about 20 µm, for example, about 3 µm to about 15 µm or about 5 µm to about 10 µm. The average particle diameter (D₅₀) means a diameter of particles at about 50 volume% of cumulative volume in a particle size distribution. If the activated carbon has the average particle diameter (D₅₀) within these ranges, rechargeable lithium batteries including the activated carbon may exhibit high input/output characteristics.

### Others

The first and second positive electrode active material layers may optionally further include other types of positive electrode active materials in addition to the first and second positive electrode active materials and activated carbon. For example, the first and second positive electrode active material layers may further include a binder and/or a conductive material. The following descriptions are common to both "positive electrodes" regardless of the first and second positive electrodes, and, thus, for convenience, the terms "first" and "second" are not indicated. Accordingly, unless otherwise noted, it should be understood that the following are descriptions apply to the first and second positive electrodes independently.

Other types of positive electrode active materials that are used in positive electrode active material may be included. For example, compounds capable of reversible intercalation and deintercalation of lithium (lithiated intercalation compounds) may be used. Specifically, one or more composite oxides of a metal selected from cobalt, manganese, nickel, and combinations thereof, and lithium may be used. As another example, the positive electrode active material may include a lithium transition metal composite oxide, and specific examples may include lithium nickel-based composite oxide, lithium cobalt-based composite oxide, lithium manganese-based composite oxide, cobalt-free lithium nickel-manganese-based composite oxide, and lithium-manganese-rich composite oxide, or combinations thereof. This positive electrode active material may be mixed with the lithium nickel-based composite oxide or lithium iron phosphate-based compound and applied to the positive electrode active material layer. An amount of such a positive electrode active material may be, for example, about 1 wt% to about 40 wt%, or about 5 wt% to about 20 wt%, based on 100 wt% of the positive electrode active material layer.

A binder improves binding properties of positive electrode active materials with one another and with a current collector. Examples of binders that may be used include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon. But the present disclosure is not limited to these examples.

A conductive material may be included to provide electrode conductivity, and any electrically conductive material may be used as a conductive material provided that it does not cause a chemical change. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative; or mixtures of such conductive materials.

The binder used in the first positive electrode active material layer may include polyvinylidene fluoride or a copolymer thereof, an acrylic resin, or combinations thereof, which have good compatibility with the first positive electrode active material including the lithium nickel-based composite oxide and excellent adhesion. The content of such binders may be about 0.5 wt% to about 10 wt%, about 0.5 wt% to about 8 wt%, about 0.5 wt% to about 6 wt%, or about 0.5 wt% to about 4 wt%, based on 100 wt% of the first positive electrode active material layer.

The binder used in the second positive electrode active material layer may include polyvinylidene fluoride or a copolymer thereof, polyvinyl chloride, or a combination thereof, which have good compatibility with the second positive electrode active material including the lithium iron phosphate-based compound and excellent adhesion. The content of such binders may be about 0.5 wt% to about 10 wt%, about 1 wt% to about 9 wt%, or about 2 wt% to about 7 wt% based on 100 wt% of the second positive electrode active material layer.

The positive electrode current collector may be, but is not limited to, aluminium foil, nickel foil, stainless steel foil, titanium foil, nickel foam, copper foam, a polymer substrate coated with a conductive metal, or combinations thereof. The first positive electrode collector and the second positive electrode collector may be the same or different from each other.

### Negative Electrode

The first negative electrode included in the first electrode assembly and the second negative electrode included in the second electrode assembly will be described. Here, the terms "first negative electrode" and "second negative electrode" are used to identify the negative electrode assembled with the first positive electrode including the lithium nickel-based composite oxide and the negative electrode assembled with the second positive electrode including the lithium iron phosphate-based compound, and "first" and "second" do not indicate any priority between the negative electrodes. For convenience, "first" and "second" are not indicated when the description of the "negative electrode" applies to both the first negative electrode and the second negative electrode. It should therefore be understood that the portions where "first" and "second" are not indicated are descriptions of both the first negative electrode and the second negative electrode.

The design of the first negative electrode assembled with the first positive electrode and the design of the second negative electrode assembled with the second positive electrode may be the same or different from each other and may be appropriately designed as needed. For example, in order to emphasize rapid charging characteristics, amorphous carbon with small capacity and good input/output characteristics, such as soft carbon, may be used as the negative electrode active material. In order to emphasize capacity characteristics, crystalline carbon, such as artificial graphite, may be used as the negative electrode active material so that the negative electrode can be appropriately designed according to its purpose.

In some example embodiments, the first negative electrode may include a first negative electrode collector and a first negative electrode active material layer on the first negative electrode collector. The second negative electrode may include a second negative electrode collector and a second negative electrode active material layer on the second negative electrode collector. The negative electrode active material layers may include a carbon-based negative electrode active material.

The carbon-based negative electrode active material may include crystalline carbon, amorphous carbon, or a combination thereof. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like. Soft carbon refers to a carbon material that can be graphitized and is a material that is easily graphitized by heat treatment at a high temperature, for example, about 2800 °C. Hard carbon is a carbon material that cannot be graphitized or is finely graphitized by heat treatment.

The negative electrode active material may be included in an amount of about 90 wt% to about 99.8 wt%, or about 90 wt% to about 99 wt%, based on 100 wt% of the negative electrode active material layer. The content of the first negative electrode active material included in the first negative electrode active material layer and the content of the second negative electrode active material included in the second negative electrode active material layer may be the same or different from each other.

The negative electrode active material layers may each independently further include a binder and/or a conductive material in addition to the carbon-based negative electrode active material. The binder serves to adhere the negative electrode active material particles to each other and also to adhere the negative electrode active material to the current collector. The binder may be a non-aqueous binder, an aqueous binder, a dry binder, or combinations thereof. The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or combinations thereof. The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or combinations thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

A dry binder may be a polymer material capable of becoming fiber, and may be, for example, polytetrafluoroethylene, polyvinylidene fluoride, a polyvinylidene fluoride-hexafluoropropylene copolymer, polyethylene oxide, or combinations thereof.

Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative; or mixtures thereof. For example, the conductive material included in the negative electrode may include carbon black, acetylene black, ketjen black, a carbon nanotube, or combinations thereof, which may lower the resistance within the negative electrode and further increase the input/output speed of lithium ions, thereby improving rapid charge/discharge characteristics.

In some example embodiments, at least one of the first negative electrode active material layer and the second negative electrode active material layer may include a conductive material. By including a conductive material in at least one of the negative electrode active material layers, high-temperature storage characteristics are improved. Further, the conductive material is dispersed through the binder to lower the resistance on the negative electrode side, thereby further improving the input/output speed of lithium ions. Because the first negative electrode and the second negative electrode are combined with the first positive electrode and the second positive electrode, which include different active materials, the composition and content of the first negative electrode and the second negative electrode can be appropriately controlled depending on the first positive electrode and the second positive electrode. For example, the composition and content of the first negative electrode and the second negative electrode may be different from each other.

A content of the binder may be about 0.5 wt% to about 5 wt%, or about 1 wt% to about 5 wt%, based on 100 wt% of the negative electrode active material layer (that is, 100 wt% of the respective first negative electrode active material layer and the second negative electrode active material layer). A content of the conductive material may be about 0.1 wt% to about 5 wt%, about 0.5 wt% to about 5 wt%, or about 1 wt% to about 4 wt%, based on 100 wt% of the negative electrode active material layers. The content of the above binder may be greater when a conductive material is included in the negative electrode active material layer than when a conductive material is not included. When the contents of the binder and the conductive material are within the above-mentioned ranges, a negative electrode having improved high-temperature storage characteristics and implementing rapid input/output characteristics may be provided. The contents of the binder and the conductive material included in the first negative electrode active material layer and the contents of the binder and the conductive material included in the second negative electrode active material layer may be the same or different from each other.

The first and second negative electrode active materials may each independently further include other types of negative electrode active materials in addition to the carbon-based negative electrode active material. Other types of negative electrode active materials may include, for example, a lithium metal, an alloy of lithium metal, a material capable of doping and dedoping lithium, etc. The lithium metal alloy includes an alloy of lithium and a metal selected from **Na,** K, Rb, Cs, Fr, Be, Mg, Ca, Sr, Si, Sb, Pb, In, Zn, Ba, Ra, Ge, Al, and Sn. The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (wherein Q is an element selected from an alkali metal, an alkaline-earth metal, a Group 13 element, a Group 14 element (excluding Si), a Group 15 element, a Group 16 element, a transition metal, a rare earth element, and a combination thereof), or combinations thereof. The Sn-based negative electrode active material may be Sn, SnOₓ (0 < x ≤ 2), a Sn-based alloy, or combinations thereof. The silicon-carbon composite may be a composite of silicon and amorphous carbon. According to some example embodiments, the silicon-carbon composite may be in the form of silicon particles and amorphous carbon coated on the surfaces of the silicon particles. For example, the silicon-carbon composite may include a secondary particle (core) in which silicon primary particles are assembled and an amorphous carbon coating layer (shell) is provided on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. The silicon-carbon composite may include a core including crystalline carbon and silicon particles and an amorphous carbon coating layer on the surface of the core.

The Si-based negative electrode active material or Sn-based negative electrode active material may be used in a mixture with a carbon-based negative electrode active material. A content of the Si-based negative electrode active material or the Sn-based negative electrode active material may be about 0.1 wt% to about 40 wt%, about 1 wt% to about 20 wt%, or about 2 wt% to about 10 wt%, based on 100 wt% of the negative electrode active material layer. In the above content ranges, high cycle-life characteristics can be realized while increasing the capacity of the negative electrode.

The negative electrode current collector may include a material selected from copper foil, nickel foil, stainless steel foil, titanium foil, nickel foam, copper foam, a polymer substrate coated with a conductive metal, and combinations thereof. The first negative electrode collector and the second negative electrode collector may be the same or different from each other.

### Separator

In some example embodiments, the first electrode assembly includes a first separator and the second electrode assembly includes a second separator. The first separator and second separator are indicated as "first" and "second" only to identify the separators included in the first electrode and second electrode assemblies and do not indicate any priority between them. The following descriptions are common to all of the separators and, thus, for convenience, "first" and "second" are not indicated. Accordingly, it should be understood that the following contents are descriptions of both the first separator and the second separator.

The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or combinations thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (for example, TEFLON^{®}), or a copolymer or mixture of two or more thereof.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof. But the present disclosure is not limited to such examples.

The organic material and the inorganic material may be mixed in one coating layer, or a coating layer including an organic material and a coating layer including an inorganic material may be stacked.

The first separator and the second separator may be the same or different.

### Electrode Assembly

In example embodiments, the first electrode assembly and a second electrode assembly are not limited to particular shapes and may be, for example, independently a jelly-roll type or a stack type.

The first and second electrode assemblies according to some example embodiments may be jelly-roll types. If the first and second electrode assemblies are jelly-roll types, there may be an advantage that the electrode assemblies have a high energy density per weight.

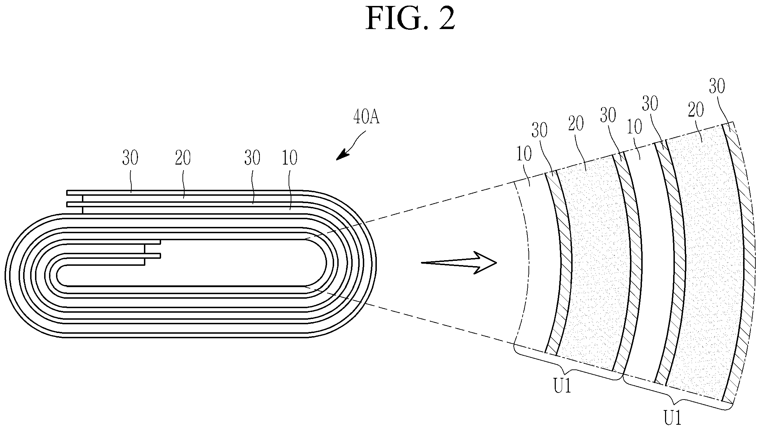

Hereinafter, referring to FIG. 2, a jelly-roll type electrode assembly according to some example embodiments is described. The left side of FIG. 2 shows a cross-section of a jelly-roll type first electrode assembly 40A included in a rechargeable lithium battery according to example embodiments of the present disclosure.

Referring to FIG. 2, the jelly-roll type first electrode assembly 40A may have a wound unit structure U1 in which the first positive electrode 10, the first separator 30, the first negative electrode 20, and the first separator 30 are stacked in order. To avoid a contact of the first positive electrode 10 and the first negative electrode 20, a length of the first separator 30 may be longer than the length of the first positive electrode 10 and/or the first negative electrode 20.

The jelly-roll type second electrode assembly may be understood, referring to FIG. 2, to have the same structure as the jelly-roll type first electrode assembly 40A.

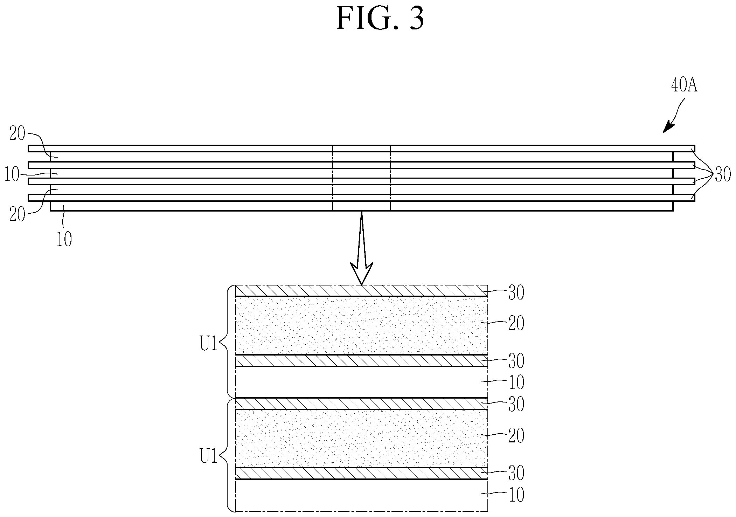

In other embodiments, the first and second electrode assemblies according to some example embodiments may be stack types. Referring to FIG. 3, stack-type electrode assemblies according to example embodiments are illustrated.

The top part of FIG. 3 shows a cross-section of the stack-type first electrode assembly 40A included in a rechargeable lithium battery according to some example embodiments, and the bottom part of FIG. 3 is an enlarged view of a portion of the cross-section.

Referring to FIG. 3, the stack-type first electrode assembly 40A may have a structure of stacking a plurality of unit structures U1 in which the first positive electrode 10, the first separator 30, the first negative electrode 20, and the first separator 30 are stacked in order.

The stack-type type second electrode assembly may be understood, referring to FIG. 3, to have the same structure as the stack-type type first electrode assembly 40A.

The first and second electrode assemblies may be in the form of a mono cell (positive electrode/separator/negative electrode), in the form of a bi-cell (positive electrode/separator/negative electrode/separator/positive electrode or negative electrode/separator/positive electrode/separator/negative electrode), or a multi-layer cell in which multiple units are stacked. Some example embodiments provide a rechargeable lithium battery in which the first electrode assembly and the second electrode assembly are housed in one case. Inside the case, the first electrode assembly and the second electrode assembly may be housed in one or more further cases, which may be connected in parallel.

### Rechargeable Lithium Battery

A rechargeable lithium battery according to example embodiments includes the first electrode assembly, the second electrode assembly, and a case in which the first electrode assembly and the second electrode assembly are housed.

The case may be cylindrical, prismatic, coin-shaped, pouch- shaped, can-shaped, or the like.

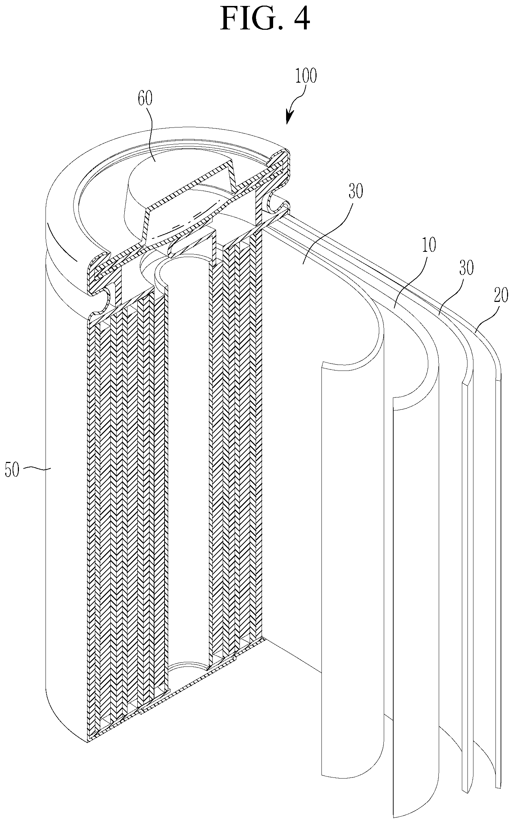

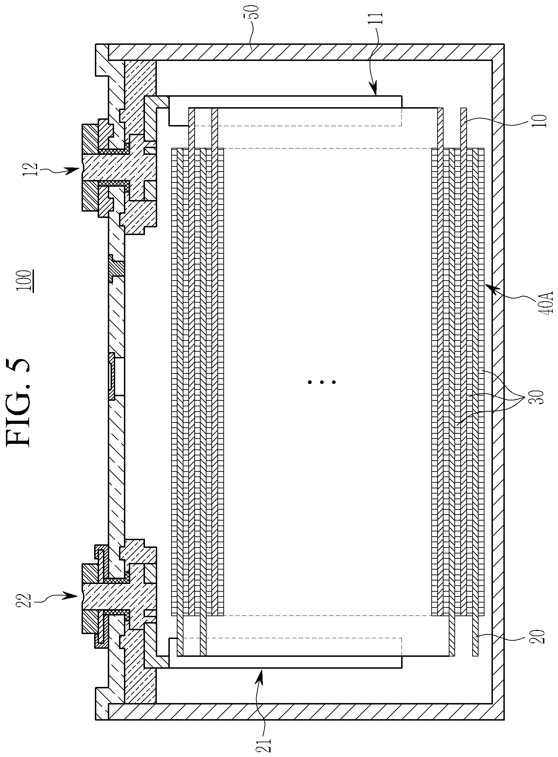

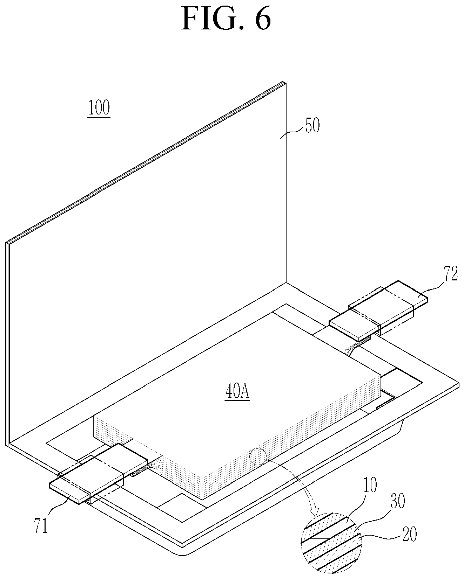

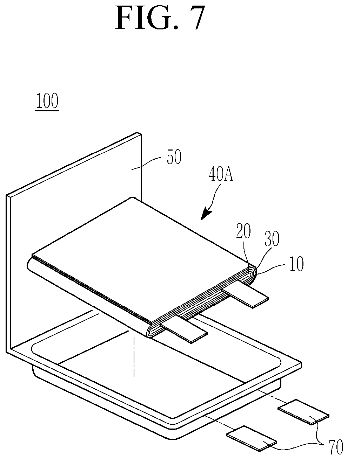

The rechargeable lithium battery may be determined by a shape or a material of the case, wherein the rechargeable lithium battery may have a shape such as cylindrical, prismatic, a pouch-shape, or a coin-shape. The rechargeable lithium battery may also be determined by a material of the pouch or the can. FIGS. 4 to 7 are schematic views showing the rechargeable lithium battery according to example embodiments, wherein FIG. 4 shows a cylindrical battery, FIG. 5 shows a prismatic battery, and FIGS. 6 and 7 show pouch-type batteries. Referring to FIGS. 4 to 7, a rechargeable lithium battery 100 may include a first electrode assembly 40A having a first separator 30 between a first positive electrode 10 and a first negative electrode 20, a second electrode assembly (not shown) having a second separator (not shown) between a second positive electrode (not shown) and a second negative electrode (not shown), and a case 50 in which the first electrode assembly 40A and the second electrode assembly (not shown) are housed. The first positive electrode 10, the first negative electrode 20, and the first separator 30 may be impregnated/immersed in an electrolyte (not shown). The rechargeable lithium battery 100 may include, as shown in FIG. 4, a sealing member 60 sealing the case 50. In addition, as shown in FIG. 5, the rechargeable lithium battery 100 may include a positive electrode lead tab 11 and a positive electrode terminal 12 and a negative electrode lead tab 21 and a negative electrode terminal 22. As shown in FIGS. 6 and 7, the rechargeable lithium battery 100 may include an electrode tab 70, that is, a positive electrode tab 71 and a negative electrode tab 72 which form an electrical path for inducing a current formed in the first electrode assembly 40A and the second electrode assembly (not shown).

FIGS. 4 to 7 do not show the second positive electrode, the second negative electrode, the second separator, and the second electrode assembly. But, referring to FIGS. 2 to 3, the rechargeable lithium battery of FIGS. 4 to 7 may be understood to have a structure that the first electrode assembly and the second electrode assembly are present in parallel. In addition, FIGS. 6 to 7 show the first electrode assembly 40A alone, but the second electrode assembly may be stacked on the first electrode assembly 40A of FIG. 6, for example, stacked in a jelly-roll form on the first electrode assembly 40A shown in FIG. 7.

### Electrolyte

The electrolyte for a rechargeable lithium battery may be an electrolyte solution that includes a non-aqueous organic solvent and a lithium salt. The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or combinations thereof.

The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent can be used alone or in a mixture of two or more types.

When using a carbonate-based solvent, a cyclic carbonate and a chain carbonate may be mixed and used, with the cyclic carbonate and the chain carbonate being mixed in a volume ratio of about 1:1 to about 1:9.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₃)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

Examples and Comparative Examples of the present disclosure are described below. However, the following are only examples of the present disclosure, and the present disclosure is not limited to the following examples.

### Example 1.

### Manufacturing of First Electrode Assembly

### (1) Manufacturing of First Positive Electrode

LiNi_{1/3}Co_{1/3}Mn_{1/3}O₂ as a first positive electrode active material, palm shell-based activated carbon powder as activated carbon, polyvinylidene fluoride as a binder, and carbon nanotube as a conductive material were mixed in a weight ratio of 93.5:5:1:0.5 (first positive electrode active material : activated carbon : binder : conductive material). The mixture was then dispersed in an N-methylpyrrolidone solvent to prepare a composition for a first positive electrode active material layer. The composition for a first positive electrode active material layer was coated on an aluminium foil current collector and then dried and compressed to form a 100 µm-thick first positive electrode. A loading level of the first positive electrode active material layer was 10 mg/cm² and the compressed first positive electrode active material layer had a density of about 3.5 g/cc.

### (2) Manufacturing of First Negative Electrode

Graphite as a first negative electrode active material, carboxymethyl cellulose and a styrene-butadiene rubber as a binder, and denka black as a conductive material were mixed in a weight ratio of 92:4:1:3 (graphite : carboxy methyl cellulose : styrene-butadiene rubber : denka black) in a water solvent to prepare a composition for a negative electrode active material layer. The composition for a negative electrode active material layer was coated on a copper foil current collector and then dried and compressed to form a first negative electrode.

### (3) Manufacturing of First Electrode Assembly

The first positive electrode, a separator of a porous polyethylene film, and the first negative electrode were sequentially stacked and then wound into a jelly-roll type to form a first electrode assembly.

### Manufacturing of Second Electrode Assembly

### (1) Manufacturing of Second Positive Electrode

A second positive electrode was made in the same manner as the first positive electrode except that LiFePO₄ was used as a second positive electrode active material, and this second positive electrode active material, activated carbon, a binder, and a conductive material were mixed in a weight ratio of 85:5:6:4 (second positive electrode active material : activated carbon : binder : conductive material).

A loading level of the second positive electrode active material layer was 10 mg/cm² and the compressed second positive electrode active material layer had density of about 3.5 g/cc.

### (2) Manufacturing of Second Negative Electrode

A second negative electrode was made in the same manner as the first positive electrode.

### (3) Manufacturing of Second Electrode Assembly

A second electrode assembly was made as a jelly-roll type in the same manner as the first electrode assembly by sequentially stacking the second positive electrode, the separator, and the second negative electrode.

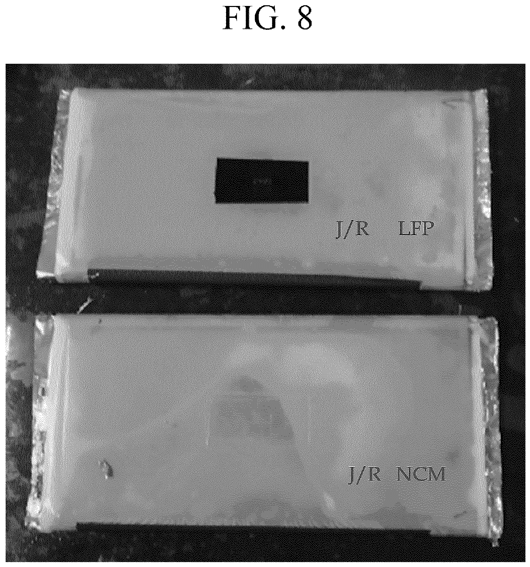

FIG. 8 are images taken of the first electrode assembly including the lithium nickel-based composite oxide (NCM) and the second electrode assembly including the lithium iron phosphate-based compound (LFP) of Example 1, with the bottom image being the first electrode assembly and the top image being to the second electrode assembly.

### Manufacturing of Rechargeable Lithium Battery Cell

After housing the first electrode assembly and second electrode assembly respectively into a case, an electrolyte was prepared by mixing ethylene carbonate (EC), ethylmethyl carbonate (EMC), and dimethyl carbonate (DMC) in a volume ratio of 2:4:4 and adding 1.15 M LiPF₆ in the mixed solvent and was injected into the case to form a rechargeable lithium battery cell.

### Comparative Example 1.

A rechargeable lithium battery cell was made in the same manner as in Example 1 except that instead of housing the first electrode assembly and the second electrode assembly into one case, only the first electrode assembly of Example 1 was housed in one case when manufacturing of the rechargeable lithium battery cell.

### Comparative Example 2.

A rechargeable lithium battery cell was made in the same manner as in Example 1 except that instead of housing the first electrode assembly and the second electrode assembly into one case, only the second electrode assembly of Example 1 was housed in one case when manufacturing of the rechargeable lithium battery cell.

### Reference Example 1.

An electrode assembly was made in the same manner as in Example 1 except that the first electrode assembly included no activated carbon when manufacturing of the first electrode assembly. A rechargeable lithium battery cell was made substantially in the same manner as in Example 1 except that instead of housing the first electrode assembly and the second electrode assembly into one case, only the electrode assembly manufactured above was housed in one case when manufacturing of the rechargeable lithium battery cell.

### Reference Example 2.

A rechargeable lithium battery cell was made in the same manner as in Example 1 except that the electrode assembly of Reference Example 1 was used instead of the second electrode assembly, and the first electrode assembly of Example 1 and the electrode assembly of Reference Example 1 were housed into one case when manufacturing the rechargeable lithium battery cell.

### Evaluation Example 1. Evaluation of Charge/Discharge Characteristics

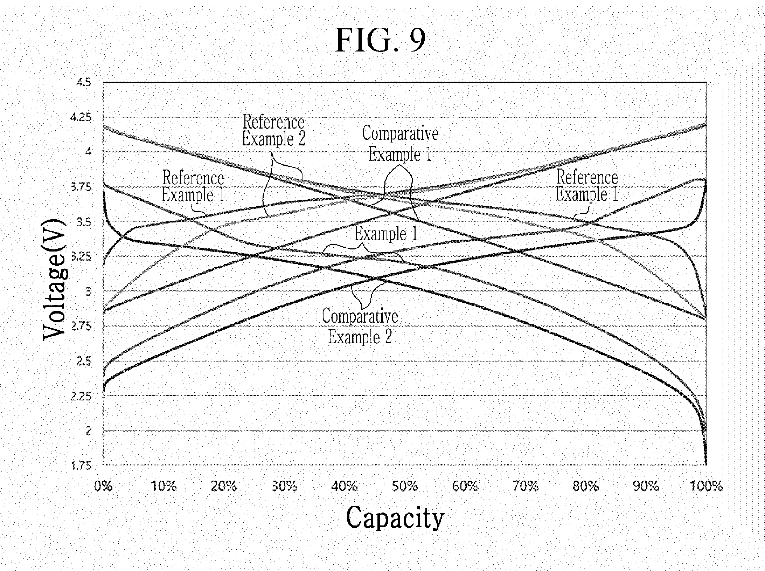

The rechargeable lithium battery cells of Example 1, Comparative Examples 1 to 2, and Reference Examples 1 to 2 were charged under the conditions of constant current (0.2 C) and constant voltage (4.25 V, 0.05 C cutoff) at 25°C, paused for 10 minutes, and discharged to 3.0 V under a constant current (0.2 C) to initially charge and discharge, and the voltage curves to capacity are shown in FIG. 9. Referring to FIG. 9, the graph of Comparative Example 2, unlike the graphs of Example 1, Comparative Example 1, and Reference Examples 1 to 2, exhibited a flat section with a relatively low slope, which made it difficult to analyze residual capacity during the operation, but Example 1 did not have a flat section of Comparative Example 2 and had an intermediate voltage section between Comparative Example 1 and Comparative Example 2.

### Evaluation Example 2. Evaluation of Cycle-life Characteristics

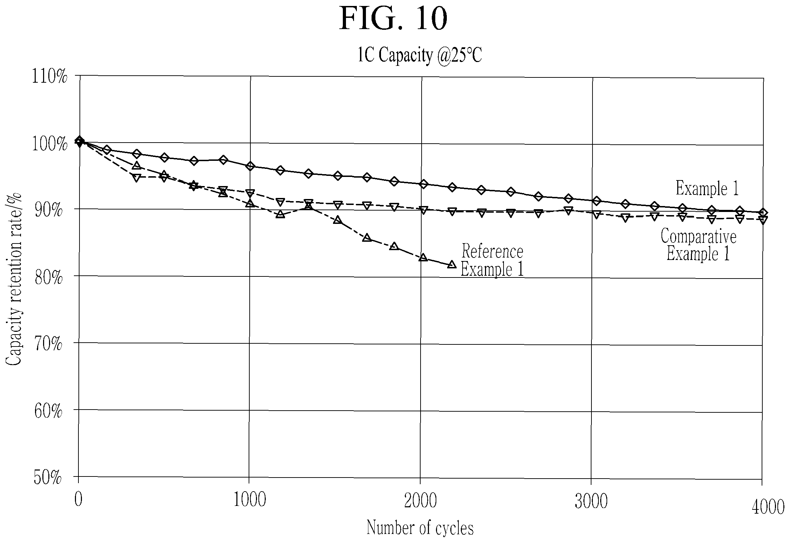

The rechargeable lithium battery cells of Example 1 and Comparative Example 1, and Reference Example 1, which proceeded with the initial charge and discharge as in Evaluation Example 1, were charged and discharged 4000 times at 1 C at 25°C and their capacity retentions according to the number of cycles were shown in FIG. 10.

Referring to FIG. 10, it can be seen that Example 1 exhibited better cycle-life characteristics than Comparative Example 1 and Reference Example 1.

While this disclosure has been described in connection with what is presently considered to be practical example embodiments, it is to be understood that the disclosure is not limited to the disclosed embodiments. Rather, the disclosure includes various modifications and equivalent arrangements.

**<Description of Symbols>**

| | | | |
|---|---|---|---|
| 100: | rechargeable lithium battery | 10: | first positive electrode |
| 11: | positive electrode lead tab | 12: | positive electrode terminal |
| 20: | first negative electrode | 21: | negative electrode lead tab |
| 22: | negative electrode terminal | 30: | first separator |
| 40A: | first electrode assembly | 40B: | second electrode assembly |
| 50: | case | 60: | sealing member |
| 70: | electrode tab | 71: | positive electrode tab |
| 72: | negative electrode tab | E: | electrolyte |
| U1: | unit structure | | |

## Claims

1. A rechargeable lithium battery comprising
a first electrode assembly including a first positive electrode, a first separator, and a first negative electrode, the first positive electrode including a first positive electrode active material including a lithium nickel-based composite oxide;
a second electrode assembly including a second positive electrode, a second separator, and a second negative electrode, the second positive electrode including a second positive electrode active material including a lithium iron phosphate-based compound; and
a case accommodating the first electrode assembly and the second electrode assembly,
wherein at least one of the first positive electrode and the second positive electrode includes activated carbon.

2. The rechargeable lithium battery as claimed in claim 1, wherein the first positive electrode active material is represented by Chemical Formula 1:
Liₐ₁Niₓ₁M¹_{y1}M²_{z1}O_{2-b1}X_{b1}
wherein, in Chemical Formula 1, 0.9≤a1≤1.2, 0.3≤x1<1, 0<y1≤0.7, 0≤z1≤0.7, 0.9≤x1+y1+z1≤1.1, and 0≤b1≤0.1, M¹ and M² are each independently one or more elements selected from Al, B, Ba, Ca, Ce, Co, Cr, Cu, Fe, Mg, Mn, Mo, Nb, Si, Sn, Sr, Ti, V, W, Y, Zn, and Zr, and X is one or more elements selected from F, P, and S.

3. The rechargeable lithium battery as claimed in claim 1 or claim 2, wherein the second positive electrode active material is represented by Chemical Formula 4 or Chemical Formula 5,
wherein Chemical Formula 4 is:
Liₐ₄Fe₍₁₋ₓ₄₎M⁴ₓ₄PO₄
wherein, in Chemical Formula 4, 0.90≤a4≤1.5, 0≤x4≤0.4, and M⁴ is Al, Ca, Ce, Cr, Cu, La, Mg, Mn, Mo, Nb, Ni, Sn, Sr, Ti, V, W, Y, Zn, Zr, or a combination thereof,
wherein Chemical Formula 5 is:
Liₐ₅Mnₓ₅Fe_{(1-x5-y5)}M⁵_{y5}PO₄
wherein, in Chemical Formula 5, 0.90≤a5≤1.5, 0.1≤x5≤0.9, 0≤y5<0.9, and M⁵ is Al, Ca, Ce, Cr, Cu, La, Mg, Mo, Nb, Ni, Sn, Sr, Ti, V, W, Y, Zn, Zr, or a combination thereof.

4. The rechargeable lithium battery as claimed in any one of claims 1 to 3, wherein the first positive electrode includes a first positive electrode current collector and a first positive electrode active material layer on the first positive electrode current collector,
wherein the first positive electrode active material layer includes a first positive electrode active material and activated carbon, and
wherein the activated carbon is included in an amount of about 1 wt% to about 10 wt% based on 100 wt% of the first positive electrode active material layer.

5. The rechargeable lithium battery as claimed in any one of claims 1 to 4, wherein the second positive electrode includes a second positive electrode current collector and a second positive electrode active material layer on the second positive electrode current collector,
wherein the second positive electrode active material layer includes a second positive electrode active material and activated carbon, and
wherein the activated carbon is included in an amount of about 1 wt% to about 10 wt% based on 100 wt% of the second positive electrode active material layer.

6. The rechargeable lithium battery as claimed in any one of claims 1 to 5, wherein a specific surface area of the activated carbon is about 1000 m²/g to about 3000 m²/g, and
wherein an average particle diameter (D₅₀) of the activated carbon is about 1 µm to about 20 µm.

7. The rechargeable lithium battery as claimed in any one of claims 4 to 6, wherein a loading level of the first positive electrode active material layer is about 5 mg/cm² to about 50 mg/cm², and
wherein a density of the first positive electrode active material layer is about 2 g/cc to about 5 g/cc.

8. The rechargeable lithium battery as claimed in any one of claims 5 to 7, wherein a loading level of the second positive electrode active material layer is about 5 mg/cm² to about 50 mg/cm², and
wherein a density of the second positive electrode active material layer is about 2 g/cc to about 5 g/cc.

9. The rechargeable lithium battery as claimed in any one of claims 1 to 8, wherein a weight ratio (a/b) of the content (a) of the first positive electrode active material to the content (b) of the second positive electrode active material included in one case is about 1:9 to about 9:1.

10. The rechargeable lithium battery as claimed in any one of claims 1 to 9, wherein the first negative electrode includes a first negative electrode collector and a first negative electrode active material layer on the first negative electrode collector, and the second negative electrode includes a second negative electrode collector and a second negative electrode active material layer on the second negative electrode collector,
wherein the first negative electrode active material layer and the second negative electrode active material layer each include a carbon-based negative electrode active material, a binder, and a conductive material, and
wherein a content of each of the binders is about 0.5 wt% to about 5 wt% based on 100 wt% of the respective first negative electrode active material layer and the second negative electrode active material layer, and a content of each of the conductive materials is about 0.1 wt% to about 5 wt% based on 100 wt% of the respective first negative electrode active material layer and second negative electrode active material layer.

11. The rechargeable lithium battery as claimed in claim 10, wherein the conductive material is carbon black, acetylene black, ketjen black, carbon fiber, carbon nanofiber, carbon nanotube, or mixtures thereof.

12. The rechargeable lithium battery as claimed in any one of claims 1 to 11, wherein each of the first electrode assembly and the second electrode assembly is a jellyroll type or a stack type.

13. The rechargeable lithium battery as claimed in any one of claims 1 to 12, wherein a number ratio of the first electrode assembly and the second electrode assembly is about 1:9 to about 9:1.

14. The rechargeable lithium battery as claimed in any one of claims 1 to 13, further comprising an electrolyte.
